# EUROPEAN PATENT SPECIFICATION

(11) **EP 2 312 676 B1**
(45) Date of publication and mention of the grant of the patent: **29.05.2013**
(21) Application number: 10157237.8
(22) Date of filing: 22.03.2010
(51) Int. Cl.: H01M 2/36, H01M 2/08

(54) **Secondary Battery**
Batterie secondaire
Sekundärbatterie

(30) Priority: 19.10.2009 US 252798 P; 02.03.2010 US 715656
(43) Date of publication of application: 20.04.2011
(73) Proprietor: Samsung SDI Co., Ltd., Gyeonggi-do (KR)
(72) Inventor: Kim, Cheon-Soo, Yongin-si Gyeonggi-do (KR)
(74) Representative: Walaski, Jan Filip

(56) References cited:
- EP-A1- 1 930 113
- EP-A2- 1 826 840
- JP-A- 2004 119 329
- JP-A- 2007 193 969
- KR-B1- 100 824 849
- US-A1- 2005 221 176
- US-A1- 2008 160 393
- US-B1- 6 361 898

## Description

The present invention relates to a secondary battery, more particularly, to a secondary battery having an improved sealing structure for an electrolyte injection hole.

Secondary batteries refer to rechargeable batteries which are widely used in portable electronic appliances such as mobile phones, laptop computers, and camcorders.

In general, a secondary battery includes a bare cell including an electrode assembly that is introduced through an opening portion of a case, wherein the opening portion is closed using a cap plate, and a protection circuit module that is installed on the cap plate of the bare cell to control charging and discharging of the secondary battery. An injection hole for injecting an electrolyte solution into the case is formed in the cap plate. Thus, after installing the cap plate in the opening portion of the case, an electrolyte solution is injected through the injection hole. After injecting the electrolyte solution, the injection hole is closed using an appropriate sealing member, and then the protection circuit module is installed on the cap plate using a molding resin.

According to the related art, the sealing member has a structure in which a ball is disposed around the opening of the injection hole of the cap plate and compressed toward an inner portion of the injection hole to seal the injection hole. However, in this case, an upper portion of the sealing member is fixed while protruding above the cap plate. When the sealing member protrudes above the cap plate, it is difficult to install the protection circuit module on the cap plate due to the protruding portion of the sealing member, and thus a secondary battery including such a sealing member may not be formed to have a compact structure. In addition, as a coating material such as UV curing agent is further coated on the sealing member for reinforced sealing, the degree of protrusion may further increase. Accordingly, a sealing structure for preventing such problems is required.

US 6,361,898 discloses a secondary battery having a cap plate with an injection hole, and a sealing member for sealing the injection hole that does not protrude above a top surface of the cap plate.

EP 1 826 840 discloses a secondary battery having a cap plate with an injection hole, and a sealing member for sealing the injection hole that protrudes above a top surface of the cap plate and has a coating on the sealing member.

One or more embodiments of the present invention include a secondary battery having an improved sealing structure for an electrolyte injection hole, and a method of manufacturing the secondary battery.

Additional aspects will be set forth in part in the description which follows and, in part, will be apparent from the description, or may be learned by practice of the presented embodiments.

According to the invention, there is provided a secondary battery according to claim 1.

The groove in the stepped portion around the circumference of the injection hole may be concave.

The body portion of the sealing member may comprise a central lobe that fits within the injection hole and the head portion may include a peripheral lobe around a perimeter of the sealing member that fits within the groove. The peripheral lobe may be substantially convex.

The central lobe may be deeper than the peripheral lobe.

The sealing member may further comprise an inclined portion between the central and peripheral lobes for engaging with a chamfered portion at the top of the injection hole.

The coating layer over the sealing member may comprise a curable resin.

The secondary battery may further comprise a protection circuit module on an upper surface of the cap plate.

Since the sealing means/unit does not protrude above a top surface of the cap plate, components adjacent to the cap plate such as a protection circuit module may be closely adhered thereto. Thus a compact device can be manufactured, thereby increasing the volume utilization efficiency.

These and/or other aspects will become apparent and more readily appreciated from the following description of the embodiments, taken in conjunction with the accompanying drawings in which:
FIG. 1 is a schematic view illustrating a secondary battery according to an embodiment of the present invention;
FIGS. 2A and 2B are schematic views illustrating a sealing unit of an electrolyte injection hole of the secondary battery illustrated in FIG. 1, according to an embodiment of the present invention; and
FIG. 3 is a schematic view illustrating a sealing unit of an electrolyte injection hole of the secondary battery illustrated in FIG. 1, according to another embodiment of the present invention.

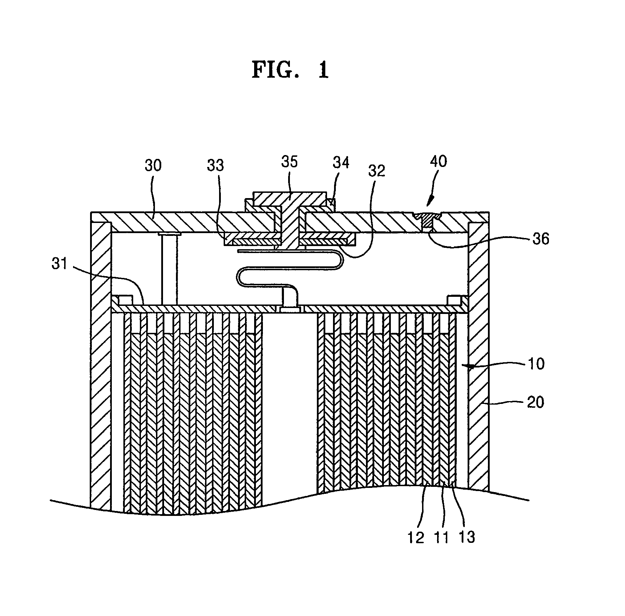

FIG. 1 is a schematic view illustrating a secondary battery according to an embodiment of the present invention. Referring to FIG. 1, the secondary battery according to the present embodiment includes a case 20 that accommodates an electrode assembly 10 including an anode 11, a cathode 12, and a separator 13, and a cap plate 30 that covers an opening of the case 20. Thus, the electrode assembly 10 is inserted into the case 20 through the opening of the case 20, and by sealing the case 20 with the cap plate 30, a bare cell in which the electrode assembly 10 is safely accommodated is provided. The secondary battery also includes an insulation case 31, a terminal plate 32, an insulation plate 33, an electrode terminal 35, and a gasket 34, which constitute a single unit cap assembly that is installed in the cap plate 30 and covers the opening of the case 20. Also, although not illustrated in FIG. 1, a protection circuit module which controls charging and discharging of the secondary battery is installed on the cap plate 30.

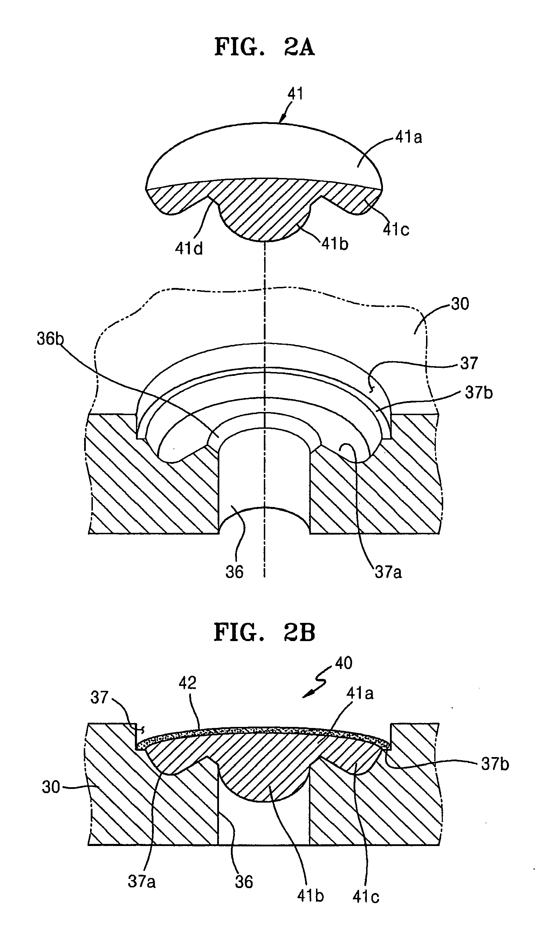

An injection hole 36 for injecting an electrolyte solution into the case 20 is formed in the cap plate 30. Thus, after installing the cap plate 30 on the opening of the case 20, an electrolyte solution is injected through the injection hole 36. In addition, after injecting the electrolyte solution, a sealing unit 40 for sealing the injection hole 36 is inserted in the injection hole 36. This will be described below in detail with reference to FIGS. 2A and 2B.

FIGS. 2A and 2B are schematic views illustrating the sealing unit 40 according to an embodiment of the present invention. Referring to FIGS. 2A and 2B, the sealing unit 40 includes a sealing member 41 that is inserted into the injection hole 36 and a coating member, or layer, 42 that is coated on the sealing member 41 and fills a gap between the injection hole 36 and the sealing member 41.

The sealing member 41 includes a body portion 41 b that is inserted into the injection hole 36 and a head portion 41a that is integrally formed with the body portion 41b. The body portion 41b is a central lobe that is surrounded by peripheral lobes 41c, separated from the central lobe 41b by an inclined portion 41d. The body portion 41b directly seals the injection hole 36 of the cap plate 30, and the head portion 41a covers an area around the opening of the injection hole 36 to prevent leakage of the electrolyte solution. In addition, a stepped portion 37 is formed around the injection hole 36 of the cap plate 30 so that the sealing member 41 is installed in the stepped portion 37. That is, the sealing member 41 is inserted into the stepped portion 37 so that the sealing member 41 does not protrude above the cap plate 30 at all. Also, a groove 37a is concavely formed in the stepped portion 37 around the circumference of the injection hole 36 and forms a lip 37b between the groove 37a and the stepped portion 37, wherein the peripheral lobes 41c of the sealing member 41 fit into the groove 37a. The inclined portion 41 d of the sealing member engages with a chamfered portion 36b at the top of the injection hole 36 to provide a close fit.

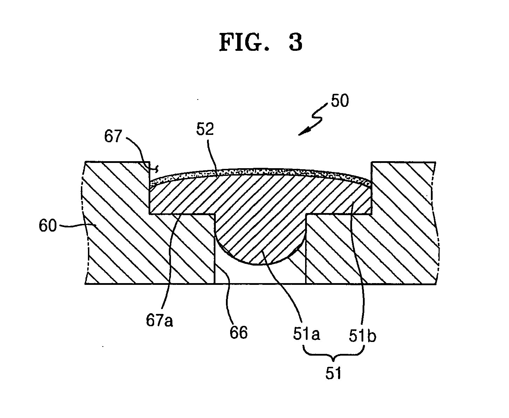

When the above-described groove 37a is formed, a contact surface between the head portion 41 a of the sealing member 41 and the cap plate 30 is further increased compared to when a flat stepped portion is used (as shown, for example, in FIG. 3 below), and thus the effect of sealing may be further increased.

The coating member 42 may be a curable resin such as a UV curing resin or thermal curing resin, and is coated on the sealing member 41 to fill a gap between the injection hole 36 and the sealing member 41. The ends of the coating member 42 cover the lip 37b. Since the coating member 42 is also coated on the sealing member 41, the height of the sealing unit 40 may increase; however, a thickness of the cap plate 30 is adjusted such that an upper portion of the coating member 42 does not protrude above the cap plate 30 but is inserted into the stepped portion 37, that is, such that the upper portion of the coating member 42 is aligned with or disposed below a top surface of the cap plate 30. Accordingly, leakage of the electrolyte solution may be stably prevented and no protrusion is formed on the cap plate 30, thereby forming a structure in which components adjacent to the cap plate 30, such as a protection circuit module, are closely adhered to the cap plate 30.

The secondary battery described above may be manufactured in the following manner.

First, the cap plate 30 including the injection hole 36 is formed, and the stepped portion 37 including the groove 37a is formed around an opening of the injection hole 36. The stepped portion 37 is formed to have a sufficient depth for accommodating the sealing unit 40, which is installed subsequently, in consideration of the height of the sealing unit 40.

Then the cap plate 30 is coupled to the case 20 in which the electrode assembly 10 is accommodated, and an electrolyte solution is injected into the case 20 through the injection hole 36.

Next, the sealing unit 40 is installed in the stepped portion 37. First, the body portion 41b of the sealing member 41 is inserted into the injection hole 36 such that the head portion 41a is completely adhered to the groove 37a. Next, the coating member 42 is coated on the sealing member 41 to completely fill a gap between the injection hole 36 and the sealing member 41. Accordingly, leakage of electrolyte may be stably prevented, and no protrusion is formed above the cap plate 30. Accordingly, by installing a protection circuit module (not shown) on the cap plate 30, a secondary battery having a compact structure is manufactured.

Meanwhile, in order that the sealing unit 40 does not protrude over the cap plate 30, the stepped portion 37 may be formed in advance to have a sufficient depth considering the height of the sealing unit 40, or instead, if a protrusion is formed above the cap plate 30, the protrusion may be ground down after installing the sealing unit 40. In other words, the sealing member 41 is pre-manufactured so as to fit the groove 37a and thus may be easily designed not to protrude over the cap plate 30. However, the thickness of the coating member 42 may vary significantly. Thus an operation of grinding away a protruding portion which may exist may be performed to securely remove the protruding portion. The coating member 42 is a curable resin and thus may be easily ground using a general tool.

FIG. 3 is a schematic view illustrating a sealing unit 50 according to another embodiment of the present invention. Referring to FIG. 3, the sealing unit 50 includes a sealing member 51 that is inserted into the injection hole 66 and a coating member, or layer, 52 that is coated on the sealing member 51 and fills a gap between the cap plate 60 and the sealing member 51.

Similarly to the embodiment of FIGS. 2A and 2B, the sealing member 51 includes a body portion 51a that is inserted into the injection hole 66 and a head portion 51b that is integrally formed with the body portion 51a. Accordingly, the body portion 51a directly seals the injection hole 66 of the cap plate 60, and the head portion 51b covers an area around the opening of the injection hole 66 to prevent leakage of the electrolyte solution. A stepped portion 67 is formed around the injection hole 66 of the cap plate 60 so that the sealing member 51 is installed in the stepped portion 67, onto a flat portion 67a of the cap plate 60. That is, the sealing member 51 is inserted into the stepped portion 67 so that the sealing member 51 does not protrude above the cap plate 60 at all.

As described above, according to the embodiments of the present invention, the sealing unit does not protrude over the cap plate, and thus components adjacent to the cap plate such as a protection circuit module may be closely adhered to the cap plate, thereby resulting in a compact device and increasing the volume utilization efficiency.

It should be understood that the exemplary embodiments described herein should be considered in a descriptive sense only and not for purposes of limitation. Descriptions of features or aspects within each embodiment should typically be considered as available for other similar features or aspects in other embodiments. The skilled person will readily understand that many variations of the specific form of the sealing unit are possible while still falling within the scope of the invention as defined by the claims.

## Claims

1. A secondary battery, comprising:
a case (20) for receiving an electrode assembly (10);
a cap plate (30) for closing the case, the cap plate having an injection hole (36) through which electrolyte is introduced into the case; and
sealing means (40) for sealing the injection hole, the sealing means (40) comprising a sealing member (41) and a coating layer (42) over the sealing member (41), wherein the sealing means is arranged so that it does not protrude above a top surface of the cap plate and wherein the sealing member includes a body portion (41b) for insertion into the injection hole and a head portion (41a) that is integrally formed with the body portion and arranged to cover an area around the injection hole,
wherein the battery further comprises:
a stepped portion (37) formed around the injection hole, wherein the sealing means is installed wholly within the stepped portion and the injection hole; and
a groove (37a) in the stepped portion around the circumference of the injection hole, wherein the head portion of the sealing member fits into the groove; and
wherein the stepped portion comprises first and second stepped portions, the second stepped portion being within the first stepped portion and forming a lip (37b) circumferentially at an edge of the groove furthest from the injection hole, the coating layer being formed on the lip.

2. The secondary battery of claim 1, wherein the groove (37a) is concave.

3. The secondary battery of claim 2, wherein the body portion (41b) of the sealing member (41) comprises a central lobe (41b) that fits within the injection hole (36) and the head portion (41 a) includes a peripheral lobe (41 c) around a perimeter of the sealing member (41) that fits within the groove.

4. The secondary battery of claim 3, wherein the peripheral lobe (41c) is substantially convex.

5. The secondary battery of claim 3 or 4, wherein the central lobe (41b) is deeper than the peripheral lobe (41 c).

6. The secondary battery of claim 3, 4 or 5, wherein the sealing member (41) further comprises an inclined portion (41d) between the central and peripheral lobes for engaging with a chamfered portion (36b) at the top of the injection hole (36).

7. The secondary battery of any one of the preceding claims, wherein the coating layer comprises a curable resin.

8. The secondary battery of any one of the preceding claims, further comprising a protection circuit module on an upper surface of the cap plate.

## Patentansprüche

1. Sekundärbatterie, umfassend:
ein Gehäuse (20) zum Aufnehmen einer Elektrodenanordnung (10);
eine Abdeckplatte (30) zum Verschließen des Gehäuses, wobei die Abdeckplatte eine Einspritzöffnung (36) aufweist, durch welche Elektrolyt in das Gehäuse eingebracht wird; und
ein Dichtmittel (40) zum Verschließen der Einspritzöffnung, wobei das Dichtmittel (40) ein Dichtelement (41) und eine Abdeckschicht (42) über dem Dichtelement (41) umfasst, wobei das Dichtmittel derart angeordnet ist, dass es nicht über eine Oberfläche der Abdeckplatte hervorsteht, und wobei das Dichtelement einen Rumpfabschnitt (41 b) zum Einsetzen in die Einspritzöffnung sowie einen Kopfabschnitt (41 a) aufweist, der einstückig mit dem Rumpfabschnitt ausgebildet ist und zum Bedecken eines Bereichs um das Einspritzloch angeordnet ist,
wobei die Batterie ferner umfasst:
einen um das Einspritzloch ausgebildeten stufenförmigen Abschnitt (37), wobei das Dichtmittel vollständig in den stufenförmigen Abschnitt und das Einspritzloch eingebracht ist; und
eine Nut (37a) in dem stufenförmigen Abschnitt um den Umfang der Einspritzöffnung, wobei der Kopfabschnitt des Dichtelements in die Nut hineinpasst; und
wobei der stufenförmige Abschnitt erste und zweite Stufenabschnitte umfasst, wobei sich der zweite Stufenabschnitt im ersten Stufenabschnitt befindet und an einem von der Einspritzöffnung am weitesten entfernten Rand der Nut eine umlaufende Lippe (37b) ausbildet, wobei die Abdeckschicht auf der Lippe ausgebildet ist.

2. Sekundärbatterie nach Anspruch 1, wobei die Nut (37a) konkav ist.

3. Sekundärbatterie nach Anspruch 2, wobei der Rumpfabschnitt (41 b) des Dichtelements (41) eine mittige Nase (41 b) umfasst, die in die Einspritzöffnung (36) passt, und der Kopfabschnitt (41 a) eine Umfangsnase (41 c) um einen Umfang des Dichtelements (41) umfasst, die in die Nut passt.

4. Sekundärbatterie nach Anspruch 3, wobei die Umfangsnase (41 c) im Wesentlichen konvex ist.

5. Sekundärbatterie nach Anspruch 3 oder 4, wobei die mittige Nase (41b) tiefer ist als die Umfangsnase (41 c).

6. Sekundärbatterie nach Anspruch 3, 4 oder 5, wobei das Dichtelement (41) ferner einen schrägen Abschnitt (41d) zwischen der mittigen und der Umfangsnase zum Eingriff mit einem abgeschrägten Abschnitt (36b) am oberen Ende der Einspritzöffnung (36) umfasst.

7. Sekundärbatterie nach einem der vorstehenden Ansprüche, wobei die Abdeckschicht ein aushärtbares Harz umfasst.

8. Sekundärbatterie nach einem der vorstehenden Ansprüche, ferner umfassend ein Schutzschaltungsmodul an einer oberen Fläche der Abdeckplatte.

## Revendications

1. Batterie secondaire, comprenant :
un boîtier (20) pour recevoir un ensemble d'électrodes (10) ;
une plaque de capuchon (30) pour fermer le boîtier, la plaque de capuchon comportant un trou d'injection (36) à travers lequel de l'électrolyte est introduit dans le boîtier ; et
des moyens d'étanchéité (40) pour sceller de façon étanche le trou d'injection, les moyens d'étanchéité (40) comprenant un élément d'étanchéité (41) et une couche de revêtement (42) sur l'élément d'étanchéité (41), les moyens d'étanchéité étant agencés de telle sorte qu'ils ne fassent pas saillie au-dessus d'une surface supérieure de la plaque de capuchon, et l'élément d'étanchéité comprenant une partie de corps (41b) pour l'insertion dans le trou d'injection et une partie de tête (41a) qui est formée d'un seul tenant avec la partie de corps et agencée de façon à recouvrir une zone autour du trou d'injection,
la batterie comprenant de plus :
une partie étagée (37) formée autour du trou d'injection, les moyens d'étanchéité étant totalement installés à l'intérieur de la partie étagée et du trou d'injection ; et
une rainure (37a) dans la partie étagée autour de la circonférence du trou d'injection, la partie de tête de l'élément d'étanchéité s'adaptant dans la rainure ; et
dans laquelle la partie étagée comprend des première et deuxième parties étagées, la deuxième partie étagée se trouvant à l'intérieur de la première partie étagée et formant une lèvre (37b) de façon circonférentielle au niveau d'un bord de la rainure le plus éloigné du trou d'injection, la couche de revêtement étant formée sur la lèvre.

2. Batterie secondaire selon la revendication 1, dans laquelle la rainure (37a) est concave.

3. Batterie secondaire selon la revendication 2, dans laquelle la partie de corps (41b) de l'élément d'étanchéité (41) comprend un lobe central (41b) qui s'adapte à l'intérieur du trou d'injection (36) et la partie de tête (41a) comprend un lobe périphérique (41c) autour d'un périmètre de l'élément d'étanchéité (41) qui s'adapte à l'intérieur de la rainure.

4. Batterie secondaire selon la revendication 3, dans laquelle le lobe périphérique (41c) est sensiblement convexe.

5. Batterie secondaire selon la revendication 3 ou 4, dans laquelle le lobe central (41b) est plus profond que le lobe périphérique (41c).

6. Batterie secondaire selon la revendication 3, 4 ou 5, dans laquelle l'élément d'étanchéité (41) comprend de plus une partie inclinée (41d) entre les lobes central et périphérique pour venir en prise avec une partie chanfreinée (36b) au sommet du trou d'injection (36).

7. Batterie secondaire selon l'une quelconque des revendications précédentes, dans laquelle la couche de revêtement comprend une résine durcissable.

8. Batterie secondaire selon l'une quelconque des revendications précédentes, comprenant de plus un module de circuits de protection sur une surface supérieure de la plaque de capuchon.
